# EUROPEAN PATENT APPLICATION

(11) **EP 4 083 876 A1**
(43) Date of publication of application: **02.11.2022**
(21) Application number: 21020235.4
(22) Date of filing: 29.04.2021
(51) Int. Cl.: G06Q 10/00, B25J 11/00, G06Q 50/20

(54) **DECISION SUPPORT SYSTEM FOR OPTIMAL INTEGRATION OF SOCIAL ROBOTS IN INTERACTIVE ACTIVITIES IN SPECIAL EDUCATION**

(71) Applicant: Special Account for Research Funds International Hellenic University, 57001 Thermi (GR)
(72) Inventor: Kaburlasos, Vassilis, 5553 Pilea (GR); Papakostas, Georgios, 67133 Xanthi (GR); Lytridis, Christoroulos, 65404 Kavala (GR)

(57) **Abstract**

A social robot has the ability to interact with humans, as long as it is equipped with appropriate devices for detecting and generating audio-visual stimuli. The proposed methodology defines how to exploit the robot's interaction capabilities depending on the desired goal of the intervention, the specific educational needs of each child and a given list of therapeutic activities, with the aim of creating an individualized intervention assisted by social robots in special education. Through the proposed methodology, the therapist can systematically plan all the activities of an individualized robot-assisted therapeutic intervention by combining the technical capabilities of the social robot, the desired therapeutic/learning goals and the cognitive characteristics of the child. The main uses of the methodology are in the design and implementation of optimal intervention protocols in education, with emphasis on special education.

## Description

### Technical Field

The present invention pertains to a methodology for optimally integrating a social robot into interactive activities within an intervention protocol, i.e. a set of proposed activities, in children's special education, in order for the social robot to become the therapist's tool and an integral part of it.

### Background

Current methods of integrating robots into treatment protocols are based primarily on strategies that involve directly replacing the therapist with a social robot, in specific activities of an existing training protocol [1,2]. In other words, given a treatment protocol that includes specific activities where the educator/therapist interacts with the child in specific ways, the activities that can be implemented either in part or in whole by a social robot are identified, and the social robot is only introduced for these activities. Another approach has to do with the design of therapeutic interventions around a specific social robot as follows: first, a social robot is selected that meets specific specifications in terms of its technical characteristics (size, appearance, cost, capabilities, ease of use, etc.) and then educational activities are designed based on the characteristics of the robot (for example [3,4]). As a general rule, this approach is limited to specific therapeutic goals and does not concern a comprehensive treatment protocol. Also, it does not allow personalization according to the educational characteristics of the child.
Existing patents focus on the presentation of specific robotic systems (e.g. [5]), or on the development of specific therapeutic activities (e.g. [6]). Nevertheless, given the increasing use of robots in education and specifically social robots in special education, there is a need for a generic methodology where the social robot can be fully integrated into individualized training interventions.

### Summary

The methodology requires in principle the systematic recording of both the therapeutic goals and the technical characteristics of a social robot that relate to the interaction and communication capabilities with humans. In this way, the therapist can match therapeutic goals with the appropriate functions of the social robot, adapted to the specific cognitive characteristics of each child. The following is an implementation of the methodology using tables, but the implementation can be achieved using other equivalent structures. Similarly, the implementation here refers exclusively to children in special education, but the proposed methodology can be applied to formal education as well as to adults, where instead of "therapeutic scenarios" there are "educational scenarios".
At the beginning of the design process, the teacher/therapist has at his disposal three tables with Intervention Data (ID). Specifically, there are three types of ID, which correspond to a) the of robot's interaction capabilities, b) the therapeutic goals and c) the specific cognitive characteristics of the child. Indicative ID tables are presented below:

| **Table ID1: Robot's interaction capabilities** | |
|---|---|
| 1. | Speech recognition. |
| 2. | Speech. |
| 3. | Face tracking. |
| 4. | Motion recognition. |
| 5. | Sound localisation. |
| 6. | Production of visual stimuli (e.g. LEDs). |
| 7. | Sound and music playback. |
| 8. | Motion. |

| **Table ID2: Therapeutic goals** | |
|---|---|
| 1. | Enhancement of basic cognitive skills (indicative therapeutic scenarios: 2, 4, 5, 7, 10). |
| 2. | Enhancement of social interaction skills and communication (indicative therapeutic scenarios: 1, 3, 6, 8, 9, 12). |
| 3. | Learning techniques to improve behavioural reactions (relaxation, self-regulation και behaviour modification) (indicative therapeutic scenarios: 3, 6, 8, 9, 10, 11, 13). |
| 4. | Enhancement of the incentive to participate (indicative therapeutic scenarios: 14, 15). |
| 5. | Spatiotemporal, pre-mathematical and logical sequence concepts. |
| 6. | Phonological awareness. |
| 7. | Visual and auditory distinction. |
| 8. | Pre-reading and pre-writing skills. |
| 9. | Reading and writing. |

| **Table ID3. Child characteristics** | |
|---|---|
| 1. | Age. |
| 2. | Gender. |
| 3. | Class. |
| 4. | Special of typical school. |
| 5. | Mental level. |
| 6. | Cognitive skills (attention, memory, perception, concentration, processing speed, spatial capacity, visual-motor coordination etc.). |
| 7. | Impulsiveness. |
| 8. | Hyperactivity. |
| 9. | Level of speech. |
| 10. | Level of understanding. |
| 11. | Behavioural difficulties. |
| 12. | Social skills. |
| 13. | Practical skills (e.g. the child dresses itself, eats by itself, ties shoelaces, etc.). |
| 14. | Reading skills. |
| 15. | Math skills. |
| 16. | Writing. |
| 17. | Grammar. |

The various elements of tables ID1, ID2 and ID3 are interrelated in such a way that the selection of an element in one array results in the automatic selection of elements in the other two tables. More specifically, the automatic adjustment of the available options is achieved through a correlation table which defines only the valid data combinations between tables ID1, ID2 and ID3. The correlation table is written by a specialist therapist. The selections of the desired ID table data by the therapist lead to the automatic selection of specific therapeutic activities from a list. An indicative list of therapeutic activities is the following:
1. Logical sequence, cohesion.
2. Visual and auditory memory - recall.
3. Symbolic and communicative play.
4. Joint attention.
5. Imitation.
6. Social stories.
7. Training in complimentary and metaphorical speech.
8. Emotional training.
9. Empathy.
10. Behaviour organisation.
11. Relaxation, mental illustration, consciousness.
12. Social skills.
13. Self-regulation.
14. Free play.
15. Dancing, music.

The selection of items from the tables ID1, ID2 and ID3 can take place in any order. This means that the educator/therapist can design the educational/therapeutic protocol based on either the interaction capabilities of the available robots, the therapeutic goal or the characteristics of a particular child.

The implementation of the proposed treatment protocol design methodology can be automated through software.

The proposed methodology can be applied to therapeutic session design that take place both in structured environments such as a treatment room or school, as well as in sessions that take place in unstructured environments such as home teleconferences.

### Advantageous Effects of Invention

The advantage of the proposed methodology is the ability of standardising the optimal design of treatment protocols, on the one hand maintaining the possibility of individualizing the therapeutic intervention according to the educational needs of each child, on the other hand ensuring the optimal use of the interaction capabilities of the social robot.

### Citation list

[1] Ismail, L.I.; Verhoeven, T.; Dambre, J.; Wyffels, F. Leveraging Robotics Research for Children with Autism: A Review. Int. J. Soc. Robot. 2019, 11, 389-410, doi:10.1007/s12369-018-0508-1.
[2] Marino, F.; Chilà, P.; Sfrazzetto, S.T.; Carrozza, C.; Crimi, I.; Failla, C.; Busà, M.; Bernava, G.; Tartarisco, G.; Vagni, D.; et al. Outcomes of a Robot-Assisted Social-Emotional Understanding Intervention for Young Children with Autism Spectrum Disorders. J. Autism Dev. Disord. 2020, 50, 0, doi:10.1007/s10803-019-03953-x.
[3] Saleh, M.A.; Hanapiah, F.A.; Hashim, H. Robot applications for autism: a comprehensive review. Disabil. Rehabil. Assist. Technol. 2020, 1-23, doi:10.1080/17483107.2019.1685016.
[4] Karakosta, E.; Dautenhahn, K.; Syrdal, D.S.; Wood, L.J.; Robins, B. Using the humanoid robot Kaspar in a Greek school environment to support children with Autism Spectrum Condition. Paladyn, J. Behav. Robot. 2019, 10, 298-317, doi:10.1515/pjbr-2019-0021.
[5] AZHEN, S. Intelligent home robot for treating autism 2018, CN108536179A.
[6] MAZUROVA, N.V.; MENKOV, A.B.; POPOV, A.F. METHOD OF TEACHING CHILDREN WITH AUTISM SPECTRUM DISORDERS OF DIFFERENT DEGREE OF MANIFESTATION USING A MODEL OF A POLYSENSORY VIRTUAL-REAL-LIFE LEARNING SPACE 2019, RU2722673C1.

## Claims

1. The proposed therapeutic protocol design methodology requires the existence of a social robot with the ability to interact with humans. It also requires a special education professional and the automated therapeutic activity selection process which may take the form of software. According to the proposed method, the process of designing a treatment protocol consists of the following steps:
a) Definition of the Intervention Data (ID) tables ID1, ID2 and ID3, and the Correlation Table (CT).
b) Selection of the desired ID table or tables as a starting point.
c) Interconnection of the data of the ID tables through the CT.
d) Automatic production of the list of therapeutic activities at the output and finalisation of a personalised protocol by the specialist therapist.

2. According to Claim 1, the method is **characterised by** the logical correlation between the ID tables through the CT table.

3. According to Claim 1, the method is **characterised by** the logical correlation between the ID tables and the list of therapeutic activities.

4. According to the preceding claims, the method is **characterised by** the description of a therapeutic intervention as a logical sequence between the robot's interaction capabilities, the therapeutic objectives, the child's specific cognitive characteristics, and the available therapeutic activities.

5. According to Claim 1, the automated therapeutic protocol design process can be implemented by suitable software which includes decision making algorithms based on computational intelligence techniques.

6. According to Claim 1, the automated treatment protocol design process is **characterized by** the correlation between the Intervention Data and the contents of the possible activities list.
